(19) Europäisches Patentamt
European Patent Office
Office européen des brevets

(11) Publication number: **0 073 036**
**B1**

(12) **EUROPEAN PATENT SPECIFICATION**

(45) Date of publication of patent specification: **06.05.87**

(21) Application number: **82107642.9**

(22) Date of filing: **20.08.82**

(51) Int. Cl.$^4$: **C 08 L 77/00,** C 08 L 77/02, C 08 L 77/06, C 08 J 5/18, B 29 C 47/00

(54) **Toughened polyamide blends.**

(30) Priority: **21.08.81 US 295018**

(43) Date of publication of application:
**02.03.83 Bulletin 83/09**

(45) Publication of the grant of the patent:
**06.05.87 Bulletin 87/19**

(84) Designated Contracting States:
**BE CH DE FR GB IT LI NL**

(56) References cited:
**AT-B- 337 985**
**DE-A-1 769 040**
**DE-A-2 654 346**
**US-A-3 845 163**
**US-A-4 174 358**

(73) Proprietor: **E.I. DU PONT DE NEMOURS AND COMPANY**
**1007 Market Street**
**Wilmington Delaware 19898 (US)**

(72) Inventor: **Epstein, Bennet Noah**
**509 Hanover Road**
**Wilmington Delaware 19809 (US)**
Inventor: **Pagilagan, Rolando Umali**
**20 Mustang Acres**
**Parkersburg West Virginia 26101 (US)**

(74) Representative: **Abitz, Walter, Dr.-Ing. et al**
**Abitz, Morf, Gritschneder, Freiherr von Wittgenstein Postfach 86 01 09**
**D-8000 München 86 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 073 036 B1

**Description**

Field of the Invention

This invention relates to toughened polyamide blends, and more particularly to toughened blends of at least one amorphous polyamide and at least one semicrystalline polyamide.

Background of the Invention

The properties of thermoplastic polyamide molding resins may be altered by addition of various additives to the resins, such as fillers or reinforcing agents, flame retardants, stabilizers and the like. In addition, other thermoplastic polymers, such as ionomeric resins, polymeric toughening agents and the like, may be added to the semicrystalline polyamide molding resins to enhance certain properties. Furthermore, certain amorphous polyamides can be molded to produce transparent molded articles. As with the semicrystalline polyamides, certain additives including other thermoplastic polymers can be added to the amorphous polymers to enhance certain properties.

It is known from US—A—3,845,163 to impart better toughness to crystalline polyamides by adding certain toughening agents.

Further, it is known from AT—B—337,985 to add tougheners to amorphous polyamides.

Blends of amorphous thermoplastic polyamides and semicrystalline thermoplastic polyamides are known from DE—A—1,769,040. These blends can contain usual additives for polyamides. Tougheners are not mentioned.

Summary of the Invention

In this invention, it has been discovered that blends of amorphous thermoplastic polyamides and semicrystalline thermoplastic polyamides can be toughened with toughening agents to a synergistic degree greater than that expected from toughening either polyamide alone.

In its broadest aspect, this invention is a blend containing (I) 99—60% by weight of thermoplastic polyamides comprising complementally

a) about 20 to 90 percent by weight, based on total polyamide, of a thermoplastic semicrystalline polyamide of film-forming molecular weight,

b) about 80 to 10 percent by weight, based on total polyamide, of a thermoplastic amorphous polyamide obtained from at least one aromatic dicarboxylic acid containing 8—18 carbon atoms and at least one diamine selected from the class consisting of

i) 2—12 carbon normal aliphatic straight-chained diamine

ii) 4—18 carbon branched aliphatic diamine, and

iii) 8—20 carbon cycloaliphatic diamine containing at least one cycloaliphatic, preferably cyclohexyl, moiety,

and wherein optionally, up to 50 weight percent of the amorphous polyamide may consist of units obtained from lactams or ω-aminoacids containing 4—12 carbon atoms, or from polymerization salts of aliphatic dicarboxylic acids containing 4—12 carbon atoms and aliphatic diamines containing 2—12 carbon atoms, with complementally (II) 1—40% by weight of blend of a toughening agent having a maximum tensile modulus of 55,160 N/cm$^2$ (80,000 psi), that is an organic polymer of film-forming molecular weight which imparts to component a) a notched Izod value at least 50 percent greater than the notched Izod value of Component a) alone when 20% by weight of the toughening agent is present with Component a).

The term "thermoplastic semicrystalline polyamide" means that the polyamide has a distinct melting point with a measurable heat of fusion as described below. Amorphous polyamides will generally have no distinct melting point nor measurable heat of fusion although with very slow cooling from the melt or sufficient annealing some cyrstallinity may develop. The heat of fusion is conveniently determined by use of a differential scanning calorimeter (DSC). A suitable calorimeter is The Du Pont Company's 990 thermal analyzer, Part Number 990000 with cell base II, Part Number 990315, and DSC cell, Part Number 900600. With this instrument, heat of fusion can be measured at a heating rate of 20°C per minute. The sample is alternately heated to a temperature above the anticipated melting point and cooled rapidly by cooling the sample jacket with liquid nitrogen. The heat of fusion is determined on any heating cycle after the first and should be a constant value, within experimental error. Amorphous polyamides are defined herein as having a heat of fusion, by this method, of less than 4.2 J/g (1 cal/gram). Semicrystalline polyamides are defined herein as having a heat of fusion of more than 4.2 J/g (1 cal/gm). For reference, semicrystalline 66 nylon polyamide with a molecular weight of about 17,000 has as heat of fusion of about 67 J/g (16 cal/gm).

Description of the Invention

The semicrystalline polyamides are well-known in the art. They have a molecular weight over 10,000 and can be produced by condensation of equimolar amounts of a saturated aliphatic dicarboxylic acid containing from 4—12 carbon atoms with an aliphatic diamine containing 2—12 carbon atoms, in which the diamine can be employed, if desired, to provide an excess of amine end groups over carboxy end groups in the polyamide. Vice versa, the diacid can be used to provide an excess of acid groups. Equally well, these polyamides may be made from acid-forming and amine-forming derivatives of said acids and amines such as esters, acid chlorides, amine salts, etc. Representative aliphatic dicarboxylic acids used to make the

polyamides include adipic acid, pimelic acid, azelaic acid, suberic acid, sebacic acid, and dodecanedioic acid, while representative aliphatic diamines include hexamethylene diamine and octamethylenediamine. In addition, these polyamides can also be prepared from self-condensation of a lactam. Examples of polyamides include polyhexamethylene adipamide (66 nylon), polyhexamethylene azelamide (69 nylon), polyhexamethylene sebacamide (610 nylon), and polyhexamethylene dodecanoamide (612 nylon), polybis(p-aminocyclohexyl)methane dodecanoamide, or polyamides produced by ring opening of lactams; i.e., polycaprolactam (6 nylon) and polylauryl lactam. It is also possible to use polyamides prepared by the polymerization of at least two of the amines or acids used to prepare the above polymers, as for example, a polymer made of adipic acid, and sebacic acid and hexamethylene diamine. Blends of polyamides, such as a mixture of 66 nylon and 6 nylon are also included as are copolymers such as nylon 66/6. Preferably the condensation polyamide employed herein is polyhexamethylene adipamide (66 nylon), or a blend of polyhexamethylene adipamide (66 nylon) and polycaprolactam (6 nylon).

With respect to the amorphous polyamides, by the term aromatic dicarboxylic acid is meant that the carboxyl groups are attached directly to an aromatic ring, such as phenylene, naphthalene, etc. By the term aliphatic diamine is meant that the amine groups are attached to a nonaromatic-containing chain such as alkylene. By cycloaliphatic diamine is meant that the amine groups are attached to a cycloaliphatic ring composed of 3 to 15 carbon atoms. The 6 carbon cycloaliphatic ring is preferred.

Preferred examples of amorphous polyamides include

a) polyamides obtained from hexamethylene diamine and a mixture of 55—100 weight percent isophthalic acid and 45%—0 terephthalic acid (based on total weight of the acids),

b) polyamides obtained from (i) a mixture of 70—100 weight percent 2,2,4- and/or 2,4,4-trimethylhexamethylene diamine and 30 to 0 weight percent hexamethylene diamine and (ii) 0—100 weight percent terephthalic acid and 100—0% isophthalic acid, wherein total weight percent diamine refers to total diamines present and weight percent acid refers to total acids present,

c) polyamides obtained from (i) an 8—20 carbon atom cycloaliphatic diamine with at least one cyclohexyl moiety and (ii) a mixture of 50—100 weight percent isophthalic acid and 50—0 weight percent terephthalic acid; and 10—50 weight percent (based on the total weight of polyamide) of a lactam, ω-aminioacids containing 4—12 carbon atoms, or salts of aliphatic dicarboxylic acids containing 4—12 carbon atoms and aliphatic diamines containing 2—12 carbon atoms,

d) polyamides obtained from a mixture of:

i) 40—98 mole percent isophthalic acid, based on total acids present,

ii) 2—60 mole percent terephthalic acid based on total acids present,

iii) 50—98 mole percent hexamethylene diamine, based on total amines present; and

iv) 2—50 mole percent, based on total amines present, of at least one aliphatic diamine containing between 8 and 20 carbon atoms and containing at least one cyclohexane nucleus,

wherein the mole percent acids present totals 100% and the mole percent amines present totals 100%.

The amorphous polyamides exhibit melt viscosities at 300°C of less than 5,000 Pa·s (50,000 poise), preferably less than 2,000 Pa·s (20,000 poise) measured at a shear stress of 1 N/cm$^2$ (10$^5$ dynes/cm$^2$). The amorphous polyamides can be prepared by known polymer condensation methods in the composition ratios mentioned above. In order to form high polymers the total moles of the acids employed should equal the total moles of the diamines employed.

Representative preferred cycloaliphatic diamines containing 8—20 carbon atoms and at least one cyclohexyl moiety or nucleus include l-amino-3-aminomethyl-3,5,5-trimethylcyclohexane, i.e.,

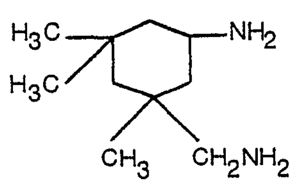

1,3- or 1,4-bis(aminomethyl)cyclohexane, i.e.,

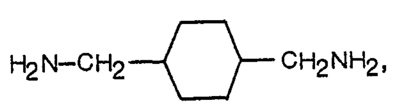

bis(p-aminocyclohexyl)-methane, i.e.,

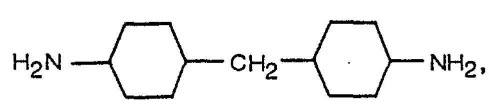

and the like.

As normally made the l-amino-3-aminomethyl-3,5,5-trimethylcyclohexane and the 1,3- or 1,4-bis(aminomethyl)cyclohexane are mixtures of the *cis* and *trans* isomers. Any isomer ratio may be used in this invention.

Bis(p-aminocyclohexyl)methane (PACM hereinafter) which can be used as one of the diamine components in this invention is usually a mixture of three stereoisomers. In this invention any ratio of the three may be used.

In addition to isophthalic acid and terephthalic acid, derivatives thereof, such as the chlorides, may be used to prepare the polymer.

The polymerization to prepare the amorphous polyamides may be performed in accordance with known polymerization techniques, such as melt polymerization, solution polymerization and interfacial polymerization techniques, but it is preferred to conduct the polymerization in accordance with the melt polymerization procedure. This procedure produces polyamides having high molecular weights. In the polymerization, diamines and acids are mixed in such amounts that the ratio of the diamine components and the dicarboxylic acid components will be substantially equimolar. In melt polymerization the components are heated at temperatures higher than the melting point of the resulting polyamide but lower than the degradation temperature thereof. The heating temperature is in the range of about 170 to 300°C. The pressure can be in the range of vacuum to 20.7 bar (300 psig). The method of addition of starting monomers is not critical. For example, salts of combinations of the diamines and acids can be made and mixed. It is also possible to disperse a mixture of the diamines in water, add a prescribed amount of a mixture of acids to the dispersion at an elevated temperature to form a solution of a mixture of nylon salts, and subject the solution to the polymerization.

If desired, a monovalent amine or, preferably, an organic acid, may be added as viscosity adjuster to a mixture of starting salts or an aqueous solution thereof.

The amounts of the amorphous polyamide present in the toughened blend of this invention will be between 10—80%, preferably 15—50% by weight based on total polyamide present.

The toughening agent can be any toughening agent having a maximum tensile modulus of 55,160 N/cm$^2$ (80,000 psi), that is an organic polymer of film-forming molecular weight which imparts to Component a) a notched Izod value at least 50% greater than the notched Izod value of Component a) alone when 20% by weight of the toughening agent is present with Component a).

Representative toughening agents include those described in U.S. Patent 4,174,358 from column 3, line 30 to column 7, line 26; those described in U.S Patent 3,668,274 from column 1, lines 34—75 and column 3, line 38 to column 6, line 54; and those described in U.S Patent 3,845,163 from column 2, lines 1—47 and the corresponding unneutralized copolymers.

The toughening agents of U.S. Patent 4,174,358 can be described as follows. Branched and straight chain polymers represented by the forumula:

$$A_{(a)}\text{-}B_{(b)}\text{-}C_{(c)}\text{-}D_{(d)}\text{-}E_{(e)}\text{-}F_{(f)}\text{-}G_{(g)}\text{-}H_{(h)}$$

derived in any order, e.g., random, from monomers A to H where

A is ethylene;

B is CO;

C is an unsaturated monomer taken from the class consisting of α,β-ethylenically unsaturated carboxylic acids having from 3 to 8 carbon atoms, and derivatives thereof taken from the class consisting of monoesters of alcohols of 1 to 29 carbon atoms and the dicarboxylic acids and anhydrides of the dicarboxylic acids and the metal salts of the monocarboxylic, dicarboxylic acids and the monoester of the dicarboxylic acid having from 0 to 100 percent of the carboxylic acid groups ionized by neutralization with metal ions and dicarboxylic acids and monoesters of the dicarboxylic acid neutralized by amine-ended caprolactam oligomers having a DP of 6 to 24;

D is an unsaturated epoxide of 4 to 11 carbon atoms;

E is the residue derived by the loss of nitrogen from an aromatic sulfonyl azide substituted by carboxylic acids taken from the class consisting of monocarboxylic and dicarboxylic acids having from 7 to 12 carbon atoms and derivatives thereof taken from the class consisting of monoesters of alcohols of 1 to 29 carbon atoms and the dicarboxylic acids and anhydrides of the dicarboxylic acids and the metal salts of the monocarboxylic, dicarboxylic acids and the monoester of the dicarboxylic acid having from 0 to 100 percent of the carboxylic acid groups ionized by neutralization with metal ions;

F is an unsaturated monomer taken from the class consisting of acrylate esters having from 4 to 22 carbon atoms, vinyl esters of acids having from 1 to 20 carbon atoms (substantially no residual acid), vinyl ethers of 3 to 20 carbon atoms, and vinyl and vinylidene halides, and nitriles having from 3 to 6 carbon atoms;

G is an unsaturated monomer having pendant hydrocarbon chains of 1 to 12 carbon atoms capable of being grafted with monomers having at least one reactive group of the type defined in C, D and E, and pendant aromatic groups which may have 1 to 6 substituent groups having a total of 14 carbon atoms; and

H is an unsaturated monomer taken from the class consisting of branched, straight chain and cyclic compounds having from 4 to 14 carbon atoms and at least one additional nonconjugated unsaturated carbon-carbon bond capable of being grafted with a monomer having at least one reactive group of the type defined in C, D and E.

The aforementioned monomers may be present in the polymer in the following mole fraction:
(a) 0 to 0.95;
(b) 0 to 0.3;
(c) 0 to 0.5;
(d) 0 to 0.5;
(e) 0 to 0.5;
(f) 0 to 0.99;
(g) 0 to 0.99; and
(h) 0 to 0.99
so that the total of all components is a mole fraction of 1.0.

At least one of B, C, D and E is present in all polymeric systems. When A is present, in addition to at least one of B, C, D and E being present, at least one of F, G and H is also present. A mixture of two or more polymers can be used with the proviso that at least one of B, C, D and E is present in at least one of the polymers.

Illustrative of monomers C to H of the above fomula are:

C is maleic acid, maleic anhydride, maleic acid monoethyl ester, metal salts of acid monoethyl ester, fumaric acid, fumaric acid monoethyl ester, itaconic acid, vinyl benzoic acid, vinyl phthalic acid, metal salts of fumaric acid monoethyl ester, monoesters off maleic, fumaric, itaconic acids with R where R is up to 29 carbon atoms, e.g., methyl, propyl, isopropyl, butyl, isobutyl, hexyl, cyclohexyl, octyl, 2-ethyl hexyl, decyl, stearyl, methoxy ethyl, ethoxy ethyl, hydroxy ethyl, etc.

D is glycidyl methacrylate, glycidyl acrylate, allyl glycidyl ether, vinyl glycidyl ether, glycidyl itaconate, etc.

E is phthalic anhydride sulfonyl azide, methyl ester and monooctadecyl ester of phthalic anhydride sulfonyl azide, benzoic acid sulfonyl azide, naphthoic acid sulfonyl azide, naphthoic diacid sulfonyl azide, R-monoesters (and metal salts thereof) of phthalic acid and naphthoic diacid sulfonyl azide, where R is up to 29 carbon atoms, etc;

F is methyl methacrylate, butyl acrylate, ethyl acrylate, vinyl acetate, methyl vinyl ether, zinc methacrylate, acrylonitrile, R-esters of acrylic, methacrylic acids; R-vinyl ethers, vinyl benzoate, vinyl naphthoate, vinyl esters of R-acids, where R is up to 18 carbon atoms, vinyl chloride, vinylidene fluoride, etc.;

G is styrene, propylene, isobutylene, vinyl naphthalene, vinyl pyridine, vinyl pyrrolidone, mono-, di-, trichlorostyrene, R'-styrene where R' is 1 to 10 carbon atoms, butene, hexene, octene, decene, etc.; and

H is hexadiene, norbornadiene, butadiene, isoprene, divinyl allyl styrene, etc.

The toughening agents of U.S. Patent 3,668,274 can be described as follows:

An organic polymer which comprises a first phase polymerized from monomers comprising 50 to 99.9 parts by weight alkyl acrylate wherein the alkyl group contains one to 15 carbon atoms, butadiene or substituted butadiene; 0 to 40 parts by weight of other ethylenically unsaturated monomers; 0 to 5 parts by weight of a polyethylenically unsaturated crosslinking monomer; and 0 to 5 parts by weight of a graft-linking monomer; and a final rigid phase thermoplastic stage containing amine-reactive carboxylic acid groups and polymerized from monomers comprising 1 to 50 parts by weight of a copolymerizable carboxylic acid, 50 to 99 parts by weight of a member selected from the group consisting of alkyl methacrylates, styrenes, acrylonitrile, methacrylonitrile and olefins that when homopolymerized, form polymers having a heat distortion temperature greater than about 20°C; 0 to 49 parts by weight of another acrylic monomer; and 0 to 40 parts of another copolymerizable ethylenically unsaturated monomer.

The toughening agents of U.S. Patent 3,845,163 can be described as normally solid ionic copolymer of units derived from α-olefin having the formula $RCH = CH_2$ wherein R is H or alkyl having from 1 to 8 carbon atoms and from 0.2 to 25 mole percent of units derived from an α,β-ethylenically unsaturated mono- or dicarboxylic acid, at least 10% of the acid groups of said units being neutralized by metal ions having a valence of from 1 to 3, inclusive. The toughening agent can also be the unneutralized polymers used to make the toughening agents of U.S. Patent 3,845,163, and in addition can be copolymers of the α-olefin and derivatives of the unsaturated mono- or dicarboxylic acid, such as the monoesters of alcohols of 1—29 carbon atoms, the anhydrides of the dicarboxylic acids, and the like.

Examples of toughening agents include

1) a polymer of ethylene, at least one α-olefin of 3 to 6 carbon atoms, and at least one unsaturated monomer taken from the class consisting of branched, straight chain and cyclic compounds having from 4 to 14 carbon atoms and having at least one additional nonconjugated unsaturated carbon-carbon bond, in which said polymer has grafted thereto an unsaturated monomer taken from the class consisting of a) α,β-ethylenically unsaturated dicarboxylic acids having from 3 to 8 carbon atoms, and derivatives thereof taken from the class consisting of monoesters of alcohols of 1 to 29 carbon atoms, b) anhydrides of the dicarboxylic acids, and c) the metal salts of the dicarboxylic acids and the monoesters of said dicarboxylic acid having from 0 to 100 percent of the carboxylic groups ionized by neutralization with metal ions. More specifically, the polymer can be a copolymer of ethylene, propylene and 1,4-hexadiene and, optionally, norbornadiene, said copolymer having grafted thereto an unsaturated monomer taken from the class consisting of fumaric acid, maleic acid, maleic anhydride, the monoalkyl ester of said acids in which the alkyl group of the ester has 1 to 3 carbon atoms;

2) a copolymer of ethylene, methyl or ethyl acrylate, and from about 0.0025—0.077 mole/100 g polymer of a mono alkyl ester of 1,4-butenedioic acid in which the alkyl group of the ester has 1 to 6 carbon atoms and having 0 to 100 percent of the esters of 1,4-butenedioic acid ionized by neutralization with metal ions selected from lithium, sodium, potassium, calcium and zinc ions;

3) a polymer of ethylene and unsaturated monomers taken from the class consisting of (a) α,β-ethylenically unsaturated carboxylic acids (preferably) having from 3 to 8 carbon atoms, and derivatives of the acid taken from the class consisting of a) monoesters of alcohols of 1 to 29 carbon atoms, b) dicarboxylic acids and anhydrides of the dicarboxylic acids and c) metal salts of the monocarboxylic, dicarboxylic acids and monoesters of the dicarboxylic acid having from 0 to 100 percent of the carboxylic acid groups ionized by neutralization with metal ions.

Useful specific polymers for toughening include the following polymers: ethylene/methacrylic acid or zinc salt of methacrylic acid, zind salt of ethylene/isobutyl acrylate/methacrylic acid; ethylene/methyl acrylate/monoethyl ester of moleic anhydride and 0 to 100 percent neutralized zinc, sodium, calcium, lithium, antimony, and potassium salts thereof; mixture of ethylene/isobutyl acrylate/methacrylic acid and ethylene/methyl acrylate/monoethyl ester of maleic anhydride and zinc salts thereof; ethylene/methyl acrylate/methacrylic acid and zinc salts thereof; ethylene/vinyl acetate/methacrylic acid and zinc salts thereof; ethylene/methyl methacrylate/methacrylic acid and zinc salts thereof; ethylene/vinyl acetate/carbon monoxide; mixtures of ethylene/vinyl acetate/carbon monoxide and a zinc salt of ethylene/isobutyl acrylate/methacrylic acid; mixture of ethylene/vinyl acetate and a zinc salt of ethylene/isobutyl acrylate/methacrylic acid; mixtures of ethylene/isobutyl acrylate and a zinc salt of ethylene/isobutyl acrylate/methacrylic acid; mixtures of ethylene/acrylic acid and ethylene/vinyl acetate; ethylene/isobutyl acrylate/carbon monoxide ethylene/stearyl methacrylate/carbon monoxide; ethylene/n-butyl acrylate/carbon monoxide; ethylene/2-ethyl hexyl methacrylate/carbon monoxide; ethylene/vinyl acetate/maleic anhydride; ethylene/vinyl acetate/monoethyl ester of maleic anhydride; ethylene/vinyl acetate/glycidyl methacrylate; ethylene/propylene/1,4-hexadiene-g-maleic anhydride; mixtures of ethylene/propylene/-1,4-hexadiene and ethylene/maleic anhydride; mixtures of ethylene/propylene/1,4-hexadiene and ethylene/propylene/1,4-hexadiene-g-maleic anhydride; ethylene/propylene/1,4-hexadiene-g-fumaric acid; ethylene/propylene/1,4-hexadiene/norbornadiene-g-maleic anhydride; ethylene/propylene/1,4-hexadiene/norbornadiene-g-monoethylester of maleic anhydride; ethylene/propylene/1,4-hexadiene/norbornadiene-g-fumaric acid; ethylene/propylene/1,4-hexadiene/glycidyl methacrylate; ethylene/propylene/1,4 hexadiene/norbornadiene-g-phthalic anhydride sulfonyl azide, mixtures of ethylene/propylene/1,4-hexadiene and ethylene/monoethyl ester of maleic anhydride; mixtures of ethylene/propylene/1,4-hexadiene and ethylene/butyl hydrogen maleate; mixtures of ethylene/propylene/1,4-hexadiene and ethylene/maleic anhydride, mixtures of butadiene/acrylonitrile and styrene/maleic anhydride; mixtures of ethylene/propylene/1,4-hexadiene/norbornadiene and styrene/maleic anhydride; isoprene/phthalic anhydride; butyl acrylate/monoethyl ester of fumaric acid; ethyl acrylate/fumaric acid; mixtures of ethylene/propylene and ethylene/monoethyl ester of maleic anhydride; ethylene/propylene/5-ethylidene-2-norbornene-g-fumaric acid, ethylene/propylene/dicyclopentadiene-g-monoethyl ester of maleic acid, ethylene/propylene/5-propenyl-2-norbornene-g-maleic anhydride, ethylene/propylene/tetrahydroindene-g-fumaric acid, ethylene/propylene/1,4-hexadiene/5-ethylidene-2-norbornene-g-fumaric acid, and mixtures of polyethylene and ethylene/propylene/hexadiene-g-fumaric acid copolymer.

The toughened blends of this invention can be prepared by mixing the crystalline polyamide, the amorphous polyamide and the toughening agent and then intimately melt blending them through a suitable melt extruder, or any other equipment for melt blending. The polyamides may be toughened separately and then dry blended or they may be toughened together. During blending the toughener is dispersed in the polyamides to a particle size that frequently is less than one micron. During mixing some transamidation may occur, the extent of which depends on factors such as temperature, residence time, and presence of substances that can catalyze the reaction.

The toughened blends may contain conventional fillers or reinforcing agents, such as glass, mica or the like, dyes, UV or heat stabilizers, flame-retardants, antioxidants, or plasticizers.

The toughened blends can be molded and extruded into useful articles having good solvent resistance, good dimensional stability, and toughness. These qualities make the blends useful for producing shaped bodies, such as automobile fenders, bumpers and the like, and long shapes, films, rods and tubes.

Preparation of Copolyamide — Preparation of Tetrapolymer of 6I/6T/PACM I/PACM T (66.8/28.6/3.2/1.4 Weight Percent Salt Ratio)

6I refers to hexamethylene diamine (HMD) and isophthalic acid (I) units,

6T refers to HMD and terephthalic acid (T) units,

PACM I refers to units of PACM and I, and

PACM T refers to units of PACM and T,

PACM means bis(p-aminocyclohexyl)methane.

To 4517 kg (9958 lb) of water were added 991 kg (2185 lb) aqueous HMD with a concentration of 80% HMD and 52 kg (115 lb) of PACM containing about 59—60% *cis, trans* isomer. The mixture was heated to 60°C and 823 kg (1815 lb) of isophthalic and 353 kg (778 lb) of terephthalic acids were added. The pH of the salt solution was then adjusted to 8.6 ± 0.1 with HMD. After pH adjustment, 2.12 kg (4.68 lb) of sodium

phenylphosphinate was added.

2722 kg (6000 lb) of the salt solution (816.5 kg; 1800 lb of salt) was charged into the preevaporator where the solution was concentrated to about 80% at 2.36 bar (20 psig) pressure and temperatures of 120°—140°C. The concentrated solution was then transferred to the autoclave and 3.3 kg (7.2 lb) of glacial acetic acid and polyethylene oxide were added. The salt solution was then heated and the pressure allowed to rise to 18.22 bar (250 psig) and additional water was slowly bled off while maintaining the pressure. When the batch temperature reached about 280°C the pressure was slowly reduced to atmospheric within 90 minutes followed by about 45-minute hold at atmospheric pressure. The polymer was then extruded from the autoclave by means of nitrogen pressure, quenched, and cut into pellets. Its inherent viscosity was 0.73. The polymer was surface coated with 0.99 weight percent aluminum distearate lubricant.

## Examples

Test Procedures

Tensile strength and elongation were determined as described in ASTM D—638. The samples were tested dry-as-molded (DAM) and after conditioning to 50% relative humidity (RH) equilibrium moisture by boiling in potassium acetate solution (0.567 kg (1.25 lb) potassium acetate per 0.454 kg (1 lb) water).

Flexural modulus was determined as described in ASTM D—790.

Notched Izod was determined as described in D—256.

The following examples illustrate the invention wherein the percentages are by weight unless indicated.

The toughened polyamide compositions are prepared as follows:

The polyamides and toughener in dry form were mixed after weighing in the proper proportions by tumbling in a polyethylene bag. The mixture was then blended in a 28 mm Werner Pfleiderer twin screw extruder in which the hopper was blanketed with nitrogen and the vacuum port maintained at an absolute pressure of between 0 and about 170 mbar (about 25 to 30 inches vacuum). Extruder barrel temperatures were set at about the melting point of the polyamide matrix (± 10°C, level condition) yielding melt temperatures in the range of 5° to about 100°C above the melting point of the matrix.

The beading exiting the extruder was water quenched, cut and vacuum dried overnight at 80°C prior to molding. Tensile bars 3.18 mm (1/8 inch) thick and test bars, 1.27 x 12.7 x 0.318 cm (1/2 x 5 x 1/8 inch) were molded in a 170 g (6 oz) injection molding machine at melt temperatures 10° to 30°C above the melting point of the polyamide matrix. The mold temperature was about 90°C with fast injection and a 20/20 or 20/30 molding cycle (seconds ram forward/second hold). The molded bars were tested in the dry-as-molded state and at 50 percent RH. The number of bars tested was sometimes less than that specified by ASTM.

Controls A to E were prepared by extrusion blending 66 polyamide and amorphous polymer in absence of toughener in the proportions indicated in Table 1.

The semicrystalline 66 polyamide had an inherent viscosity of about 1.25 ± 0.10 measured as 0.5 g per 100 ml of m-cresol at 25°C. End groups were 65—73 eq. of COOH/$10^6$ gm of polymer and 47—53 eq. of $NH_2$ per $10^6$ gm of polymer. It had a heat of fusion of 67 J/g (16 cal/gm).

The toughening agents used in the Examples had tensile moduli less than 80,000.

TABLE 1

| Control | 66 Polyamide % | Amorphous Polyamide % | Flexural Modulus N/mm² | (Kpsi) | Notched Izod N·m cm | (Ft Lb/In) |
|---|---|---|---|---|---|---|
| Control A | 100 | 0 | 2896 | (420) | 0.59 | (1.1) |
| Control B | 75 | 25 | 3103 | (450) | 0.27 | (0.5) |
| Control C | 50 | 50 | 2827 | (410) | 0.32 | (0.6) |
| Control D | 25 | 75 | 2965 | (430) | 0.64 | (1.2) |
| Control E | 0 | 100 | 2689 | (390) | 0.53 | (1.0) |

It is seen that blends of the crystalline polyamide (66 polyamide) and amorphous polyamide without toughener do not show any consistent tendency toward toughening, as characterized by notched Izod measurement, when compared with the separate polymers.

Controls F and G and Example 1, in Table 2 below, were prepared using the same polyamides as in Controls A to E. The toughening agent for Control F and Example 1 comprised a mixture of (a) 10 percent of a copolymer of ethylene/propylene/hexadiene/norbornadiene, 66—70/25—29/4.1/0.4 on a weight basis and a Mooney viscosity of 50—60 by ASTM D—1646 ML—2 + 10 at 121°C grafted with fumaric acid to obtain 1.8

percent fumaric acid graft, and (b) 9 percent of the copolymer defined in (a) but without carboxyl groups grafted thereto. The toughening agent for Control G contained 10 percent of (a) as in Control F and Example 1 and 9 percent of a copolymer of ethylene/propylene/hexadiene 70—74/23—27/2.4 with a Mooney viscosity of 42—54. The minor difference in Component (b) is not significant.

TABLE 2

| Example | 66 Polyamide % | Amorphous Polyamide % | Notched Izod N·m cm | (Ft Lbs/In) |
|---|---|---|---|---|
| Control F | 81 | 0 | 9.02*/11.05** | (16.9*/20.7**) |
| 1 | 54 | 27 | 12.01*/13.02** | (22.5*/24.4**) |
| Control G | 0 | 81 | 10.94*/11.53** | (20.5*/21.6**) |

* Measured at the end of the injection molded bar near the gate.
** Measured at the end of the injection molded bar away from the gate.

The notched Izod of the toughened blend of the two polyamides is, surprisingly, significantly higher than that of either toughened polyamide alone.

Example 2 and Control H, shown in Table 3 below, were prepared in the same way as Example 1 and Controls F and G except that 12 percent of the grafted ethylene copolymer was used as the toughening agent.

Again, the product with the blend of polyamides produced the tougher product.

TABLE 3

| Example | Composition: 66 Polyamide % | Composition: Amorphous Polyamide % | Dry-as-Molded Properties: Tensile Strength N/mm² (Kpsi) | Elongation % | Flexural Modulus N/mm² (Kpsi) | Notched Izod N·m/cm | Notched Izod (Ft-Lb/In) | Flexural Modulus 50% RH N/mm² | Flexural Modulus 50% RH (Kpsi) |
|---|---|---|---|---|---|---|---|---|---|
| 2 | 59 | 29 | 67.6 (9.8) | 37.2 | 2,000 (290) | 8.91/10.25 | (16.7/19.2) | 1931 | (280) |
| Control H | 88 | — | 66.9 (9.7) | 42.8 | 2,000 (290) | 6.67/9.29 | (12.5/17.4) | 827 | (120) |

Example 3 and Controls I and F were prepared using the same polyamides as in the previous Examples, but the toughener used was 35% of an ionomeric copolymer. The ionomeric copolymer was an ethylene/methacrylic acid copolymer of weight ratio 90/10 that is 72% neutralized with $Zn^{++}$ ions. The copolymer was prepared as described in Rees U.S. Patent 3,264,272 and had a melt flow (gms/10 min, measured by ASTM 1238, Condition E) of about 1 after neutralization.

Again, the blend of polyamides was toughened to a greater degree than either polyamide alone, as seen by Table 4.

TABLE 4

| | Composition | | | Dry-as-Molded Properties | | | |
|---|---|---|---|---|---|---|---|
| Example | Crystalline Polyamide % | Amorphous Polyamide % | Ionomeric Copolymer (Toughener) % | Flexural Modulus $N/mm^2$ | (Kpsi) | Notched Izod N·m cm | (Ft-Lb/In) |
| Control I | 65% | — | 35% | 1,586 | (230) | 11.85/15.11 | (22.2/28.3) |
| Control J | — | 65% | 35% | 1,586 | (230) | 11.48/12.06 | (21.5/22.6) |
| Example 3 | 43.3% | 21.7% | 35% | 1,448 | (210) | 15.69/16.07 | (29.4/30.1) |

**Claims**

1. A blend containing (I) 99—60% by weight of thermoplastic polyamides comprising complementally

a) about 20 to 90 percent by weight, based on total polyamide, of a thermoplastic semicrystalline polyamide of film-forming molecular weight,

b) about 80 to 10 percent be weight, based on total polyamide, of a thermoplastic amorphous polyamide obtained from at least one aromatic dicarboxylic acid containing 8—18 carbon atoms and at least one diamine selected from the class consisting of

i) 2—12 carbon aliphatic straight-chained diamine

ii) 4—18 carbon branched aliphatic diamine, and

iii) 8—20 carbon cycloaliphatic diamine containing at least one cyclohexane moiety,

and wherein optionally, up to 50 weight percent of the amorphous polyamide may consist of units obtained from lactams or ω-aminoacids containing 4—12 carbon atoms, or from polymerization salts of aliphatic dicarboxylic acids containing 4—12 carbon atoms and aliphatic diamines containing 2—12 carbon atoms, with complementally (II) 1—40% by weight of blend of a toughening agent having a maximum tensile modulus of 55,160 $N/cm^2$ (80,000 psi), and that is an organic polymer of film-forming molecular weight which imparts to Component a) a notched Izod value at least 50% greater than the notched Izod value of component a) alone when 20% by weight of the toughening agent is present with Component a).

2. A blend of Claim 1 wherein in the polyamides defined in I, the semicrystalline polyamide, is present in an amount of between about 50—85 percent by weight based on weight of polyamides and the amorphous polyamide is present in an amount of between about 50—15 percent by weight based on weight of polyamides present.

3. The blend of Claim 2 in which the amorphous polyamide is selected from

a) polyamides obtained from hexamethylene diamine and a mixture of 55—100 weight percent isophthalic acid and 45%—0 terephthalic acid (based on total weight of the acids),

b) polyamides obtained from (i) a mixture of 70—100 weight percent 2,2,4- and/or 2,4,4-trimethylhexamethylene diamine and 30 to 0 weight percent hexamethylene diamine and (ii) 0—100 weight percent terephthalic acid and 100—0% isophthalic acid, wherein total weight percent diamine refers to total diamines present and weight percent acid refers to total acids present,

c) polyamides obtained from (i) an 8—20 carbon atom cycloaliphatic diamine with at least one cyclohexyl moiety and (ii) a mixture of 50—100 weight percent isophthalic acid and 50—0 weight percent terephthalic acid; and 10—50 weight percent (based on the total weight of polyamide) of a lactam, ω-aminoacids containing 4—12 carbon atoms, or salts of aliphatic dicarboxylic acids containing 4—12 carbon atoms and aliphatic diamines containing 2—12 carbon atoms,

d) polyamides obtained from a mixture of:

i) 40—98 mole percent isophthalic acid, based on total acids present,

ii) 2—60 mole percent terephthalic acid based on total acids present,

iii) 50—98 mole percent hexamethylene diamine, based on total amines present; and

iv) 2—50 mole percent, based on total amines present, of at least one aliphatic diamine containing between 8 and 20 carbon atoms and containing at least one cyclohexane nucleus,

wherein the mole percent acids present totals 100% and the mole percent amines present totals 100%.

4. The blend of Claim 1 in which the amorphous polyamide is
i) 40—98 mole percent isophthalic acid, based on total acids present,
ii) 2—60 mole percent terephthalic acid based on total acid present,
iii) 50—98 mole percent hexamethylene diamine, based on total amines present; and
iv) 2—50 mole percent, based on total amines present, of at least one aliphatic diamine containing between 8 and 20 carbon atoms and containing at least one cyclohexane nucleus.

5. The blend of Claims 1, 2, 3 or 4 wherein the toughening agent is a polymer of ethylene, at least one α-olefin of 3 to 6 carbon atoms, and at least one unsaturated monomer taken from the class consisting of branched, straight chain and cyclic compounds having from 4 to 14 carbon atoms and having at least one additional nonconjugated unsaturated carbon-carbon bond, in which said polymer has grafted thereto an unsaturated monomer taken from the class consisting of a) α,β-ethylenically unsaturated dicarboxylic acids having from 3 to 8 carbon atoms, and derivatives thereof taken from the class consisting of monoesters of alcohols of 1 to 29 carbon atoms, b) anhydrides of the dicarboxylic acids, c) the metal salts of the dicarboxylic acids and the monoesters of said dicarboxylic acid having from 0 to 100 percent of the carboxylic groups ionized by neutralization with metal ions.

6. The blend of Claims 1, 2, 3 or 4 wherein the toughening agent is a polymer of ethylene and unsaturated monomers taken from the class consisting of (a) α,β-ethylenically unsaturated carboxylic acids (preferably) having from 3 to 8 carbon atoms, and derivatives of the acid taken from the class consisting of a) monoesters of alcohols of 1 to 29 carbon atoms b) dicarboxylic acids and anhydrides of the dicarboxylic acids and c) metal salts of the monocarboxylic, dicarboxylic acids and monoesters of the dicarboxylic acid having from 0 to 100 percent of the carboxylic acid groups ionized by neutralization with metal ions.

7. The blend of Claim 6 wherein the toughening agent is a copolymer of ethylene, methyl or ethyl acrylate, and from about 0.0025—0.077 mole/100 g polymer of a mono alkyl ester of 1,4-butenedioic acid in which the alkyl group of the ester has 1 to 6 carbon atoms and having 0 to 100 percent of the esters of 1,4-butenedioic acid ionized by neutralization with metal ions selected from lithium, sodium, potassium, calcium and zinc ions.

8. The blend of Claims 1, 2, 3 or 4 wherein the toughening agent is an organic polymer which comprises a first phase polymerized from monomers comprising 50 to 99.9 parts by weight alkyl acrylate wherein the alkyl group contains one to 15 carbon atoms, butadiene or substituted butadiene; 0 to 40 parts by weight of other ethylenically unsaturated monomers; 0 to 5 parts by weight of a polyethylenically unsaturated crosslinking monomer; and 0 to 5 parts by weight of a graft-linking monomer; and a final rigid phase thermoplastic stage containing amine-reactive carboxylic acid groups and polymerized from monomers comprising 1 to 50 parts by weight of a copolymerizable carboxylic acid, 50 to 99 parts by weight of a member selected from the group consisting of alkyl methacrylates, styrenes, acrylonitrile, methacrylonitrile and olefins that when homopolymerized, form polymers having a heat distortion temperature greater than about 20°C; 0 to 49 parts by weight of another acrylic monomer; and 0 to 40 parts of another copolymerizable ethylenically unsaturated monomer.

9. The blend of Claims 1, 2, 3 or 4, in which the semicrystalline polyamide is 66 polyamide.

10. Process for preparing the blend of Claim 1 which comprises mixing components a), b) and c).

11. Process for preparing a molded article form the blend of Claim 1 which comprises extruding the blend into a mold.

12. Process for preparing an extruded article from the blend of Claim 1 which comprises extruding a long shape, film, rod, tube, angle or the like and cooling until the shaped form is solidified.

**Patentansprüche**

1. Mischung, enthaltend (I) 99 bis 60 Gew.-% an thermoplastischen Polyamiden, komplementär unfassend

a) etwa 20 bis 90 Gew.-%, bezogen auf das gesamte Polyamid, eines thermoplastischen semikristallinen Polyamids von film-bildendem Molekulargewicht,

b) etwa 80 bis 10 Gew.-%, bezogen auf das gesamte Polyamid, eines thermoplastischen amorphen Polyamids, erhalten aus wenigstens einer aromatischen Dicarbonsäure, enthaltend 8 bis 18 Kohlenstoffatome, und wenigstens einem Diamin, ausgewählt aus der Klasse bestehend aus
i) aliphatisches, geradkettiges Diamin mit 2 bis 12 Kohlenstoffatomen,
ii) aliphatisches, verzweigtes Diamin mit 4 bis 18 Kohlenstoffatomen, und
iii) cycloaliphatisches Diamin, enthaltend wenigstens eine Cyclohexangruppe, mit 8 bis 20 Kohlenstoffatomen,

und in welcher wahlweise bis zu 50 Gew.-% des amorphen Polyamids aus Einheiten bestehen kann, die von Lactamen oder ω-Aminosäuren, enthaltend 4 bis 12 Kohlenstoffatome, oder von Polymerisationssalzen von aliphatischen Dicarbonsäuren, enthaltend 4 bis 12 Kohlenstoffatome, und aliphatischen Diaminen, enthaltend 2 bis 12 Kohlenstoffatome, erhalten wurden, und ergänzend (II) 1 bis 40 Gew.-%, bezogen auf die Mischung, eines zähigmachenden Mittels mit einem maximalen Zugmodul von 55.160 N/cm$^2$ (80.000 psi), welches ein organisches Polymeres von film-bildendem Molekular-gewicht ist, das der Komponente a) einen Izod-Kerbschlagzähigkeitswert verleiht, der wenigstens 50% größer ist als

der Izod-Kerbschlagzähigkeitswert der Komponente a) alleine, wenn 20 Gew.-% an zähigmachendem Mittel zusammen mit der Komponente a) anwesend sind.

2. Mischung nach Anspruch 1, in welcher innerhalb der in I definierten Polyamide das semikristalline Polyamid in einer Menge zwischen etwa 50 bis 85 Gew.-%, bezogen auf das Gewicht der Polyamide, anwesend ist, und das amorphe Polyamid in einer Menge zwischen etwa 50 bis 15 Gew.-%, bezogen auf das Gewicht der Polyamide, anwesend ist.

3. Mischung nach Anspruch 2, in welcher das amorphe Polyamid ausgewählt ist aus

a) Polyamiden, erhalten aus Hexamethylendiamin und einer Mischung von 55 bis 100 Gew.-% Isophthalsäure und 45% bis 0 Terephthalsäure (bezogen auf das Gesamtgewicht der Säuren),

b) Polyamiden, erhalten aus (i) einer Mischung von 70 bis 100 Gew.-% 2,2,4- und/oder 2,4,4-Trimethylhexamethylendiamin und 30 bis 0 Gew.-% Hexamethylendiamin und (ii) 0 bis 100 Gew.-% Terephthalsäure und 100 bis 0% Isophthalsäure, wobei sich die Diamin-Gesamtgewichtsprozente auf die insgesamt anwesenden Diamine bezieht, und die Säure-Gewichtsprozente sich auf die insgesamt anwesenden Säuren bezieht,

c) Polyamiden, erhalten aus (i) einem cycloaliphatischen Diamin mit 8 bis 20 Kohlenstoffatomen, das wenigstens eine Cyclohexylgruppe aufweist und (ii) einer Mischung von 50 bis 100 Gew.-% Isophthalsäure und 50 bis 0 Gew.-% Terephthalsäure; und 10 bis 50 Gew.-% (bezogen auf das Gesamtgewicht des Polyamids) eines Lactams, ω-Aminosäuren, enthaltend 4 bis 12 Kohlenstoffatome, oder Salze von aliphatischen Dicarbonsäuren, enthaltend 4 bis 12 Kohlenstoffatome und aliphatischen Diaminen, enthaltend 2 bis 12 Kohlenstoffatome,

d) Polyamiden, erhalten aus einer Mischung von:

i) 40 bis 98 Mol-% Isophthalsäure, bezogen auf die insgesamt anwesenden Säuren,

ii) 2 bis 60 Mol-% Terephthalsäure, bezogen auf die insgesamt anwesenden Säuren,

iii) 50 bis 98 Mol-% Hexamethylendiamin, bezogen auf die insgesamt anwesenden Amine; und

iv) 2 bis 50 Mol-%, bezogen auf die insgesamt anwesenden Amine, wenigstens eines aliphatischen Diamins mit zwischen 8 und 20 Kohlenstoffatomen, das wenigstens einen Cyclohexankern enthält, worin sich die Mol-% der anwesenden Säuren auf insgesamt 100% und die Mol-% der anwesenden Amine auf insgesamt 100% belaufen.

4. Mischung nach Anspruch 1, in welcher das amorphe Polyamid besteht aus

i) 40 bis 98 Mol-% Isophthalsäure, bezogen auf die insgesamt anwesenden Säuren,

ii) 2 bis 60 Mol-% Terephthalsäure, bezogen auf die insgesamt anwesende Säure,

iii) 50 bis 98 Mol-% Hexamethylendiamin, bezogen auf die insgesamt anwesenden Amine; und

iv) 2 bis 50 Mol-%, bezogen auf die insgesamt anwesenden Amine, wenigstens eines aliphatischen Diamins, das zwischen 8 und 20 Kohlenstoffatome aufweist und wenigstens einen Cyclohexankern enthält.

5. Mischung nach den Ansprüchen 1, 2, 3 oder 4, in welcher das zähigmachende Mittel ein Polymeres ist aus Ethylen wenigstens einem α-Olefin mit 3 bis 6 Kohlenstoffatomen, und wenigstens einem ungesättigten Monomeren aus der Klasse bestehend aus verzweigten, geradkettigen und cyclischen Verbindungen, die 4 bis 14 Kohlenstoffatome und wenigstens eine zusätzliche, nicht-konjugierte ungesättigte Kohlenstoff-Kohlenstoff-Bindung aufweisen, wobei das genannte Polymere ein aufgepfropftes ungesättigtes Monomeres aufweist aus der Gruppe bestehend aud a) α,β-ethylenisch ungesättigten Dicarbonsäuren mit 3 bis 8 Kohlenstoffatomen und Derivaten von diesen aus der Klasse bestehend aus Monoestern von Alkoholen mit 1 bis 29 Kohlenstoffatomen, b) Anhydriden der Dicarbonsäuren, c) Metallsalzen der Dicarbonsäuren und Monoestern der genannten Dicarbonsäuren, wobei 0 bis 100% der Carboxylgruppen durch Neutralisation mit Metallionen ionisiert sind.

6. Mischung nach den Ansprüchen 1, 2, 3 oder 4, in welcher das zähigmachende Mittel ein Polymeres ist von Ethylen und ungesättigten Monomeren aus der Klasse bestehend aus a) α,β-ethylenisch ungesättigten Carbonsäuren (bevorzugt) mit 3 bis 8 Kohlenstoffatomen, und Derivaten der Säure aus der Klasse bestehend aus a) Monoestern von Alkoholen mit 1 bis 29 Kohlenstoffatomen, b) Dicarbonsäuren und Anhydriden der Dicarbonsäuren und c) Metallsalzen der Monocarbonsäuren, Dicarbonsäuren und Monoestern der Dicarbonsäuren, wobei 0 bis 100% der Carbonsäuregruppen durch Neutralisation mit Metallionen ionisiert sind.

7. Mischung nach Anspruch 6, in welcher das zähigmachende Mittel ein Copolymeres ist von Ethylen, Methyl- oder Ethylacrylat und etwa 0,0025 bis 0,077 Mol/100 g Polymeres eines Monoalkylesters von 1,4-Butendisäure, in welchem die Alkylgruppe des Esters 1 bis 6 Kohlenstoffatome aufweist, wobei 0 bis 100% der Ester der 1,4-Butendisäure durch Neutralisation mit Metallionen, ausgewählt aus Lithium-, Natrium-, Kalium-, Calcium- und Zinkionen, ionisiert sind.

8. Mischung nach den Ansprüchen 1, 2, 3 oder 4, in welcher das zähigmachende Mittel ein organisches Polymeres ist, umfassend eine erste Phase, polymerisiert aus Monomeren, umfassend 50 bis 99,9 Gew.-Teile Alkylacrylat, in welchem die Alkylgruppe 1 bis 15 Kohlenstoffatome enthält, Butadien oder substituiertes Butadien; 0 bis 40 Gew.-Teile an anderen ethylenisch ungesättigten Monomeren; 0 bis 5 Gew.-Teile eines polyethylenisch ungesättigten Vernetzungsmonomeren; und 0 bis 5 Gew.-Teile eines Pfropfungsmonomeren; sowie eine starre thermoplastische Endstufenphase, enthaltend amin-reaktive Carbonsäuregruppen, und polymerisiert aus Monomeren, umfassend 1 bis 50 Gew.-Teile einer copolymerisierbaren Carbonsäure, 50 bis 99 Gew.-Teile eines Mitgliedes, ausgewählt aus der Gruppe bestehend aus Alkylmethacrylaten, Styrolen, Acrylnitril, Methacrylnitril und Olefinen, die bei der Homopolymerisation

Polymere mit einer Wärmeverformungstemperatur größer als etwa 20°C bilden; 0 bis 49 Gew.-Teile eines anderen acrylischen Monomeren; und 0 bis 40 Teile eines anderen copolymerisierbaren ethylenisch ungesättigten Monomeren.

9. Mischung nach den Ansprüchen 1, 2, 3 oder 4, in welcher das semikristalline Polyamid Polyamid 66 ist.

10. Verfahren zur Herstellung der Mischung nach Anspruch 1, welches das Vermischen der Komponenten a), b) und c) umfaßt.

11. Verfahren zur Herstellung eines geformten Gegenstandes aus der Mischung nach Anspruch 1, welches das Extrudieren der Mischung in eine Form umfaßt.

12. Verfahren zur Herstellung eines extrudierten Gegenstandes aus der Mischung nach Anspruch 1, welches das Extrudieren eines langen Formstückes, einer Folie, eines Stabes, einer Röhre, eines Kniestückes oder dergleichen und das anschließende Kühlen umfaßt, bis das Formstück verfestigt ist.

**Revendications**

1. Un mélange contenant (I) 99—60% en poids de polyamides thermoplastiques comprenant de manière complémentaire

a) environ 20 à 90% en poids, par rapport au total des polyamides, d'un polyamide thermoplastique semi-cristallin de poids moléculaire filmogène,

b) environ 80 à 10% en poids, par rapport au total des polyamides, d'un polyamide thermoplastique amorphe obtenu à partir d'au moins un acide dicarboxylique aromatique contenant 8—18 atomes de carbone et d'au moins une diamine choisie dans la classe constituée par

1) des diamines aliphatiques normales à chaîne droite de 2—12 atomes de carbone,

2) des diamines aliphatiques ramifiées de 4—18 atomes de carbone, et

3) des diamines cycloaliphatiques de 8—20 atomes de carbone contenant au moins une portion cyclohexane, et où, éventuellement, une proportion de jusqu'à 50% en poids du polyamide amorphe peut consister en mailles obtenues à partir de lactames ou d'oméga-amino-acides contenant 4—12 atomes de carbone, ou par polymérisation de sels d'acides dicarboxyliques aliphatiques contenant 4—12 atomes de carbone et de diamines aliphatiques contenant 2—12 atomes de carbone, avec, de mainère complémentaire (II) 1—40% du poids du mélange d'un agent de ténacité ayant un module maximal de traction de 55 160 $N/cm^2$, qui est un polymère organique de poids moléculaire filmogène qui donne au constituant a) une résistance au choc Izod sur éprouvette entaillée supérieure d'au moins 50% à la résistance au choc Izod sur éprouvette entaillée du constituant a) isolément quand une proportion de 20% en poids de l'agent de ténacité est présente avec le constituant a).

2. Un mélange selon la revendication 1, dans lequel, dans les polyamides définis en (I), le polyamide semi-cristallin est présent à raison de 50—85% en poids par rapport au poids des polyamides et le polyamide amorphe est présent à raison de 50—15% en poids par rapport au poids des polyamides présents.

3. Le mélange selon la revendication 2, dans lequel le polyamide amorphe est choisi parmi

a) les polyamides obtenus à partir d'hexaméthylène diamine et d'un mélange de 55—100% en poids d'acide isophtalique et de 45—0% en poids d'acide téréphtalique (par rapport au poids total des acides),

b) les polyamides obtenus à partir de (i) un mélange de 70—100% en poids de 2,2,4- et/ou 2,4,4-triméthyl-hexaméthylène diamine et de 30—0% en poids d'hexaméthylène diamine et de (ii) 0—100% en poids d'acide téréphtalique et 100—0% d'acide isophtalique, le pourcentage en poids total de diamine se rapportant au total des diamines présentes et le pourcentage en poids d'acide se rapportant au total des acides présents,

c) les polyamides obtenus à partir de (i) une diamine cyclo-aliphatique de 8—20 atomes de carbone avec au moins une portion cyclohexyle et de (ii) un mélange de 50—100% en poids d'acide isophtalique et de 50—0% en poids d'acide téréphtalique; et de 10—50% en poids (par rapport au poids total de polyamide) d'un lactame, d'oméga-amino-acides contenant 4—12 atomes de carbone ou de sels d'acides dicarboxyliques aliphatiques contenant 4—12 atomes de carbone et de diamines aliphatiques contenant 2—12 atomes de carbone,

d) les polyamides obtenus à partir d'un mélange de

i) 40—98 moles% d'acide isophtalique, par rapport au total des acides présents,

ii) 2—60 moles% d'acide téréphtalique, par rapport au total des acides présents,

iii) 50—98 moles% d'hexaméthylène diamine, par rapport au total des amines présentes; et

iv) 2—50 moles%, par rapport au total des amines présentes, d'au moins une diamine aliphatique contenant entre 8 à 20 atomes de carbone et contenant au moins un noyau de cyclohexane, où le pourcentage molaire des acides présents est au total de 100% et le pourcentage molaire des amines présentes est au total de 100%.

4. Le mélange selon la revendication 1, dans laquelle le polyamide amorphe consiste en

i) 40—98 moles% d'acide isophtalique, par rapport au total des acides présents,

ii) 2—60 moles% d'acide téréphtalique, par rapport au total des acides présents,

iii) 50—98 moles% d'hexaméthylène diamine, par rapport au total des amines présentes; et

iv) 2—50 moles%, par rapport au total des amines présentes, d'au moins une diamine aliphatique contenant entre 8 à 20 atomes de carbone et contenant au moins un noyau de cyclohexane.

5. Le mélange selon les revendications 1, 2, 3 ou 4, dans lequel l'agent de ténacité est un polymère d'éthylène, d'au moins une alpha-oléfine de 3 à 6 atomes de carbone et d'au moins un monomère insaturé pris dans la classe constituée par des composés ramifiés, à chaîne droite et cycliques ayant de 4 à 14 atomes de carbone et ayant au moins une liaison carbone-carbone insaturée non-conjuguée supplémentaire, ce polymère ayant, greffé sur lui, un monomère insaturé pris dans la classe constituée par a) les acides dicarboxyliques éthyléniquement insaturés en alpha, bêta ayant de 3 à 8 atomes de carbone, et leurs dérivés pris dans la classe constituée par les monoesters d'alcools de 1 à 29 atomes de carbone, b) les anhydrides des acides dicarboxyliques et c) les sels de métaux des acides dicarboxyliques et des monoesters des acides dicarboxyliques ayant de 0 à 100 pour cent des groupes carboxyliques ionisés par neutralisation par des ions de métaux.

6. Le mélange selon les revendications 1, 2, 3 ou 4 dans lequel l'agent de ténacité est un polymère d'éthylène et de monomères insaturés pris dans la classe constituée par (a) les acides carboxyliques éthyléniquement insaturés en alpha, bêta ayant (de préférence) 3 à 8 atomes de carbone et les dérivés de l'acide pris dans la classe constituée par a) les monoesters d'alcools de 1 à 29 atomes de carbone, b) les acides dicarboxyliques et les anhydrides des acides dicarboxyliques et c) les sels de métaux des acides monocarboxyliques, dicarboxyliques et monoesters des acides dicarboxyliques ayant 0 à 100% des groupes acide carboxylique ionisés par neutralisation par des ions de métaux.

7. Le mélange selon la revendication 6, dans lequel l'agent de ténacité est un copolymère d'éthylène, d'acrylate de méthyle ou d'éthyle, et d'environ 0,0025—0,077 mole/100 g de polymère d'un ester monoalcoylique de l'acide 1,4-butènedioïque dans lequel le groupe alcoyle de l'ester a 1 à 6 atomes de carbone et ayant 0 à 100% des groupes esters d'acide 1,4-butènedioïque ionisés par neutralisation par des ions de métaux choisis parmi des ions de lithium, de sodium, de potassium, de calcium et de zinc.

8. Le mélange selon les revendications 1, 2, 3 ou 4, dans lequel l'agent de ténacité est un polymère organique qui comprend une première phase polymérisée à partir de monomères comprenant 50 à 99,9 parties en poids d'acrylate d'alcoyle où le groupe alcoyle contient de 1 à 15 atomes de carbone, de butadiène ou de butadiène substitué; 0 à 40 parties en poids d'autres monomères éthyléniquement insaturés; 0 à 5 parties en poids de monomère polyéthyléniquement insaturé formant des liaisons transversales; et 0 à 5 parties en poids d'un monomère se liant par greffage; et une phase rigide finale au state thermoplastique contenant des groupes acide carboxylique réactifs avec les amines et polymérisée à partir de monomères comprenant 1 à 50 parties en poids d'un acide carboxylique copolymérisable, 50 à 99 parties en poids d'un membre choisi dans le groupe consitiué par les méthacrylates d'alcoyle, le styrène, l'acrylonitrile, le méthacrylonitrile et les oléfines qui, lors d'une homopolymérisation, forment des polymères ayant une température de déformation à chaud au-dessus de 20°C environ; 0 à 49 parties en poids d'un autre monomère acrylique; et 0 à 40 parties en poids d'un autre monomère éthyléniquement insaturé copolymérisable.

9. Le mélange selon les revendications 1, 2, 3 ou 4, dans lequel le polyamide semi-cristallin est du polyamide 66.

10. Procédé pour préparer le mélange de la revendication 1, selon lequel on mélange les constituants a), b) et c).

11. Procédé pour préparer un acticle moulé à partir du mélange de la revendication 1, qui comprend l'extrusion du mélange dans un moule.

12. Procédé pour préparer un article extrudé à partir du mélange de la revendication 1, qui comprend l'extrusion d'une forme longue, d'une pellicule, d'un jonc, d'un tube, d'un profilé, etc., et le refroidissement jusqu'à ce que la forme obtenue soit solidifiée.